Europäisches Patentamt

European Patent Office

Office européen des brevets

(19)

(11) **EP 1 104 204 A2**

(12) **EUROPEAN PATENT APPLICATION**

(43) Date of publication:
**30.05.2001 Bulletin 2001/22**

(51) Int Cl.⁷: **H04Q 3/00**

(21) Application number: **00125673.4**

(22) Date of filing: **23.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.11.1999   JP   33680299**

(71) Applicants:
• **ASCII CORPORATION**
  **Tokyo (JP)**

• **Murayama, Kyohei John**
  **Sennan-gun, Osaka (JP)**

(72) Inventor: **Murayama, Kyohei John**
  **Sennan-gun, Osaka (JP)**

(74) Representative: **Dr. Weitzel & Partner**
  **Friedenstrasse 10**
  **89522 Heidenheim (DE)**

(54) **Telephone service system**

(57)    The telephone service system delivers advertisement messages via a public telephone line to a terminal connected to the public telephone line. The memory (5) of the telephone service system stores service data for information necessary to provide the telephone service and advertisement message data (65) for the advertising messages. The processing section (5) of the telephone service system comprises a position acquiring section that acquires position information from the terminal, a service providing section that provides the telephone service to the terminal using the service data, and an advertisement processing section (54) that delivers advertising messages to the terminal. The advertising messages are associated with one or more of rank information indicating the priority order when advertisement messages are to be delivered, position information indicating the area in which the advertisement messages are to be delivered, and timeband information indication the timeband during which the advertisement messages are to be delivered. The advertisement processing section (54) searches the advertisement message data using the position information and current time depending on the information associated with the advertisement message, and carries out processing to deliver the retrieved advertisement message to the terminal.

FIG.1

EP 1 104 204 A2

**Description**

BACKGROUND OF THE INVENTION

Field of the Invention

The present invention relates to a telephone service system, method, and recording media for recording a program therefore that delivers advertising messages through a terminal, such as telephone, connected to a pubic telephone line and able to transmit Dual Tone Multi-Frequency (DTMF) signals.

This application is based on a patent application No. Hei 10-338269 filed in Japan, the content of which is incorporated herein by reference.

Description of the Related Art

It is sometimes difficult for a tourist arriving at a station near a destination to reach the actual intended spot, for example, when the traveler is not familiar with the local routes to the destination spot. A portable navigation system can provide an aid in such a circumstance.

A portable device based on the global navigation system (GPS) is an example of such a portable navigation system. The GPS system utilizes wave signals transmitted from a satellite to acquire the present position and, by referencing the present position with the maps stored in the system, provides a navigation service to a desired destination.

However, although such portable GPS devices are becoming smaller with advances in technology, they do have certain weight and size, and are bothersome for pedestrians including tourists to carry about such a bulky device.

Furthermore, batteries as a power source are a necessary part of any portable GPS device, but as its voltage is diminished, the GPS becomes inoperable.

Thus, the applicants have proposed (U.S. Patent Application, No. 09/450,111) a navigation system that provides navigation information necessary for acquiring information for navigation by using the DTMF signals to a terminal, such as telephone, able to transmit DTMF signals.

SUMMARY OF THE INVENTION

In addition, in the above-cited application, the applicants propose delivering advertising messages during idle time while providing the navigation information to a terminal such as a telephone.

The processing that delivers these advertising messages is not limited to a navigation system, but can be applied to any type of telephone service.

One object of the present invention is to provide a telephone service system that transmits suitable advertising messages during the idle time of the telephone service to a terminal connected to pubic telephone lines such as a telephone.

Thus, the present invention is a system that delivers advertising messages via a pubic telephone line to a terminal connected to the pubic telephone lines, and provides a telephone service comprising a memory section and a processing section. This memory section stores service data that stores information necessary for providing the telephone service, and advertising message data that stores advertising messages. The processing section provides a position acquiring section that acquired the position information from the terminal, a service providing section that provides telephone service to the terminal using the service data and provides assistance in providing the telephone service. In the advertising message data, the advertising messages are associated with at least one among rank information that indicates the priority order when the advertising messages are delivered, position information that indicates the area in which advertising messages are to be delivered, and timeband information during which the advertisement data is to be delivered. The advertising processing section searches for advertising message data depending on the information associated with the advertising messages using the position information and the current time, and delivers the retrieved advertising messages to the terminal.

The present invention has the advantage that suitable advertising messages can be delivered during the idle time of various telephone services such as a telephone services that telecommunications related companies provide, such as telephone number assistance, user support service for products, etc., by telephone, and services for repair using a telephone during, for example, an automotive breakdown when driving outdoors.

In addition, the present invention is a system that delivers advertising messages via a pubic telephone line to a terminal connected to the pubic telephone line, and provides a telephone service that carries out telephone call transfers comprising a memory section and a processing section. The memory section stores advertising messages, and stores advertising message data associated with at least one or more among rank information that indicates the priority order when advertising messages are delivered, position information that shows the area where the advertising messages are to be delivered, and timeband information that indicates the timeband during which the advertising messages are to be delivered. The processing section provides a position acquiring section that acquired position information from the terminal that serves as the connection source, a service providing section that acquires telephone numbers of the connection destination from the terminal of the connection source, and connects the lines between the terminal of the connection source and the terminal of the connection destination, and an advertising processing section that delivers to one of these terminals advertising messages stored in the advertising message data. The advertising processing section searches the advertising message data using the present position and current time depending on the information associated with the advertising message and delivers the retrieved message to the terminal.

The present invention has the advantage that suitable advertising messages can be delivered by telephone during the idle time during telephone call transferring services.

In addition, the present invention is a system that delivers advertising messages via a public telephone line to a terminal connected to a pubic telephone line and provides a telephone service system that comprises a memory section and a processing section, and carries out telephone call transfer to a particular connection destination. The memory section stores connection destination data comprising connectable telephone numbers and advertising message data associating each telephone number in the connection destination data with advertising messages. The processing section provides sub-sections which are a service providing section that acquired the telephone number of the connection destination from the terminal of the connection source and connects lines between the terminal of a connection source and the terminal of a connection destination in the case that the telephone number of the connection destination is in the connection destination data, and an advertising processing section that delivers to either of the terminals advertising messages stored in the advertising message data. The advertising processing section delivers to a terminal advertising messages associated with the telephone number of a connection destination in the case that the telephone number of the connection destination is in the connection data.

The present invention provides the advantage that delivering messages, which are inappropriate relative to the connection destination, can be prevented.

In addition, in each of the above-described telephone service systems, the present invention is characterized in the advertising message being associated with rank information of the advertising messages that indicates the priority order when advertising messages are to be delivered, position information showing the area in which the advertising messages are to be delivered, and timeband information showing the timeband during which the advertising messages are to be delivered; the advertising processing section priority delivers the advertising messages to the terminal in the case that there are advertising messages whose rank has been set to unconditional priority delivery as rank information, and wherein in the case that there are no advertising message rank has been set to unconditional priority delivery as rank information, or after the advertising message whose rank has been set to unconditional priority delivery as rank information is delivered, advertising message data is searched using the position information and the current time, and the retrieved advertising messages are delivered to the terminal in sequence.

The present invention has the advantage that by changing the information set thereby, advertising messages having a high degree of urgency can be delivered easily. Furthermore, the present invention has the advantage that advertising messages are delivered to terminals depending on the position and timeband.

In addition, the present invention provides a method related to the above-described telephone service system, and a computer readable recording medium that records a program that executes a method on this computer.

Reference numerals appended to elements in the claims are not meant to limit the applicability of claims.

BRIEF DESCRIPTION OF THE DRAWINGS

Figure 1 is a diagram of the overall structure of the navigation that is an example of a telephone service system.

Figure 2 is a diagram of an example of the structure of the navigation system.

Figure 3 is a diagram of an example of the structure of the transport facility terminal device.

Figure 4 is a flowchart of the operation of the navigation system.

Figure 5 is a flowchart showing the details of step S0 in Figure 4.

Figure 6 is a diagram of an example of the configuration of longitudinal and latitudinal data.

Figure 7 is a flowchart showing the details of step S2 in Figure 4.

Figure 8 is a flowchart showing the details of step S3 in Figure 4.

Figure 9 is a flowchart showing the details of step S4 in Figure 4.

Figure 10 is a diagram of an example of the configuration of advertising messages.

Figure 11 is a flowchart showing the details of step S6 in Figure 4.

Figure 12 is a flowchart showing the operation of the terminal device at a transport facility.

Figure 13 is a diagram of an example of the display on the terminal device at the transport facility.

DESCRIPTION OF THE PREFERRED EMBODIMENTS

It should be noted that the following embodiments do not limit the invention according to the claims. It should also be noted that combinations of the features explained in the embodiment may not necessarily be required in all cases in order to attain the object.

Below, the navigation system of the present invention that is an example of a telephone service system that delivers advertising messages to a terminal is explained referring to the figures.

In the following presentation, a person who has accessed or is trying to access the navigation system is referred to as the "user".

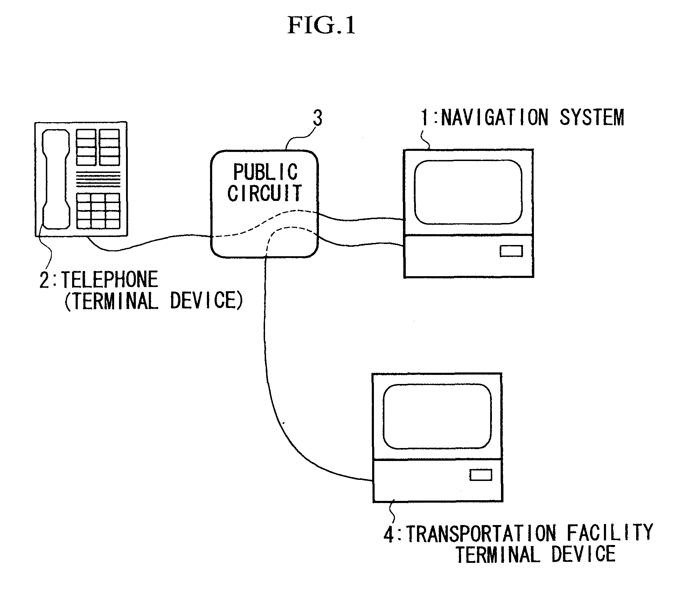

Figure 1 indicates an overall configuration of the navigation system 1, which acquired information on a present position and a destination position from a telephone device (terminal device) 2 used by a pedestrian to receive voice navigational guides; and a transport facility terminal device 4 which is disposed, for example, in a transport facility such as a taxi dispatching center, for acquiring/displaying information about the present position of the user according to the navigation system 1. The navigation system 1, telephone 2, transport facility terminal device 4 are connected to a pubic telephone line 3, and exchange information required for navigation through the pubic telephone line 3.

Here, the telephone device is a type that is capable of transmitting DTMF signals by pressing numerals [0] to [9] or other special keys such as [*] and [#], and is connected by wire to the pubic telephone line 3.

Next, the detailed structure of the navigation system 1 will be explained.

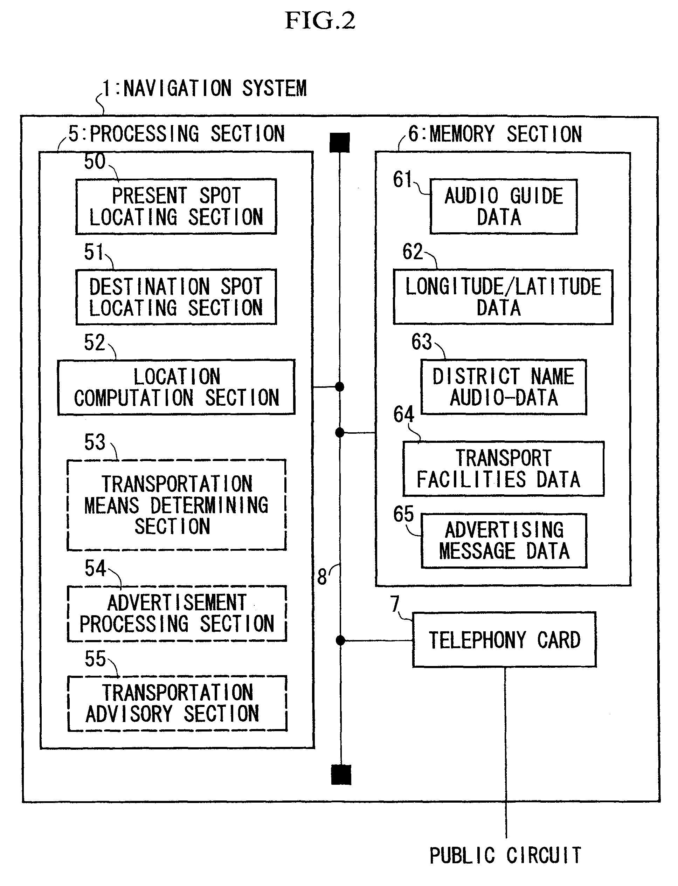

Figure 2 indicates an example of the structure of the navigation system 1 comprised by: a processing section 5 for performing various processes required for navigational guidance; a memory section 6 for storing data necessary to perform navigation service; and a telephony card 7 for connecting to a pubic telephone line, all of which are connected by a bus system 8.

Telephony card 7 provides the following functions: to execute communication protocol with the pubic telephone line 3; to detect DTMF signals forwarded from the telephone 2 and to identify respective keys such as [*] or [#] and numerals between [0] to [9] to correspond to the signals; to convert signals received in a specific format, such as the wav-format used for digitized music/voice signals, to analogue signals for transmission to the pubic telephone line 3.

Memory section 6 stores data that are used during the navigation service, such as audio guide data 61; longitude/latitude data 62; district name audio-data 63; transport facilities data 64; advertising message data 65.

Here, audio guide data 61 is comprised by a plurality of digital files produced by digitizing voice signals necessary for providing audio-guidance in a specific format such as wav-files, in this case.

Longitude/latitude data 62 relate position information (telephone number) for specifying a position to the longitudinal and latitudinal data.

District name audio-data 63 relate a position to the voice files for announcing the position (district name), and are assumed to be in the wav-format.

Transport facilities data 64 relates longitudinal and latitudinal data to the information on the position of a train station or a taxi dispatching center.

Advertising message data 65 are related to a plurality of voice files containing the advertising audio-messages, in the wav-format, in this case.

Details of the contents of the above data will be explained later.

The memory section 6 is comprised by non-volatile memory devices such as hard disc or opto-magnetic disc.

The processing section 5 is comprised by: a present spot locating section 50; a destination spot locating section 51; a position computation section 52; a transport means determining section 53; an advertisement processing section 54; and a transport facility advisory section 55.

Present spot locating section 50 executes the steps to: receive position information on the position of the inquiring telephone; search through the longitude/latitude data 62 using the position information as the search key; and acquire longitude/latitude information on the present position. Here, [position information] refers to information required for specifying the present position or destination position. In this embodiment, [position information] is given by a telephone number.

Destination spot locating section 51 executes the steps: to receive DTMF signals sent from the telephone indicating the destination position; search through the longitude/latitude data 62, using the position information as the search key; and acquire longitude/latitude information on the destination.

Position computation section 52 executes the steps to compute at least one of distance and direction, according to the longitudinal and latitudinal data received from the present spot locating section 50 as well as the longitudinal and latitudinal data received from the destination spot locating section 51. Also, the position computation section 52 sends voice report of the results of computation to the inquiring telephone.

Transport means determining section 53 executes the steps to determine an optimum transportation route for reaching the destination from the present position, according to longitudinal and latitudinal data for the present position acquired from the present spot locating section 50 as well as longitudinal and latitudinal data for the destination acquired from the destination spot locating section 51, and then, using these data as search keys, search through the transport facilities data 64. Also, the transport means determining section 53 informs the user of the selected transportation route by voice, through the telephone. In this embodiment, a transport facility includes "walking", "taxi" and "train", so that the optimum facility is comprised by a combination of such means.

Advertisement processing section 54 executes the steps to transmit advertising messages stored in the advertising message storage 65 during the idle periods between processing steps, that is, when information is not being exchanged between the telephone and navigation system 1.

Transport facility advisory section 55 executes the steps to inform the user of the transport means determined by the transport means determining section 53; for example, if the facility chosen is a taxi and the user requests this service, the transport facility advisory section 55 forwards information necessary to dispatch a taxi such as the present position determined by the present spot locating section 50 and/or longitudinal and latitudinal data to the transport facility terminal device 4 disposed in the taxi dispatching center.

Here, the processing section 5 is comprised by memory devices and a central processing unit (CPU), and the functions to execute application programs (not shown in the diagram) to provide various operations by computer means.

Also, it is supposed that peripheral devices such as input and display devices are connected to the present navigation system 1, but they are not indicated in the diagram. Input device includes a keyboard and a mouse and the like. Display device includes a cathode ray tube (CRT) and a liquid crystal display panel and the like.

Next, the transport facility terminal device 4 will be explained.

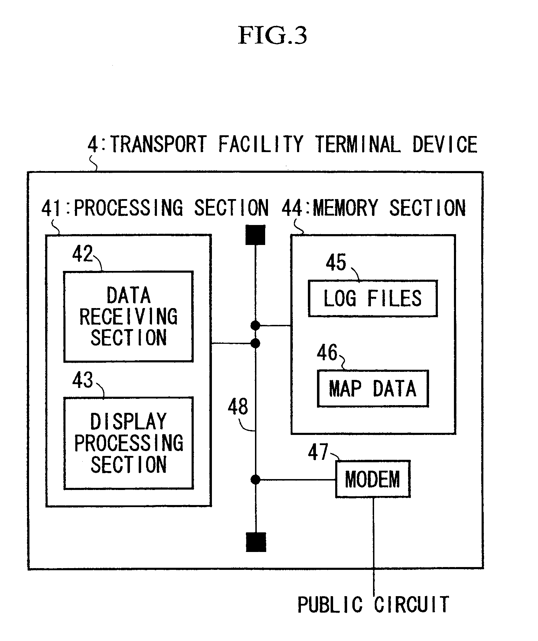

Figure 3 indicates an example of the structure of the transport facility terminal device 4 comprised by: a processing section 41 for performing various processes on the information acquired from the navigation system 1; a memory section 44 for storing data necessary to process information acquired from the navigation system 1; and a modem 47 for connecting to the pubic telephone line, all of which are connected by a bus system 48.

Memory section 44 stores a log file 45 and map data 46.

Log file 45 successively stores information sent from the navigation system 1.

Map data 46 are data to form a map image corresponding to the longitudinal and latitudinal data, and are used to display the present position of the user, who has accessed the navigation system 1, in an easy to understand manner.

Here, the memory section 44 is comprised by a non-volatile memory device such as hard disc and opto-magnetic disc.

Processing section 41 is comprised by a data receiving section 42 and a display section 43.

Here, the data receiving section 42 executes the steps to acquire the information sent by the navigation system 1.

Display processing section 43 executes the steps to searches through the map data 46 using the information acquired by the data receiving section 42, and display information on the present position of the user.

In this case, processing section 41 is comprised by a memory and a CPU and the like, and executes the functions by loading the application programs stored in the memory and executing the programs (not shown) by computer means.

Also, it is supposed that the transport facility terminal device 4 is connected to peripheral devices such as input and display devices, but they are not indicated in the diagram. Input device includes keyboard and mouse and the like. Display device includes cathode ray tube (CRT) and liquid crystal display panel and the like.

Next, the operation of the navigation system 1 will be explained. In the following presentation, the user inputs the telephone number assigned to the line connected to the navigation system 1 using the telephone 2 shown in Figure 1.

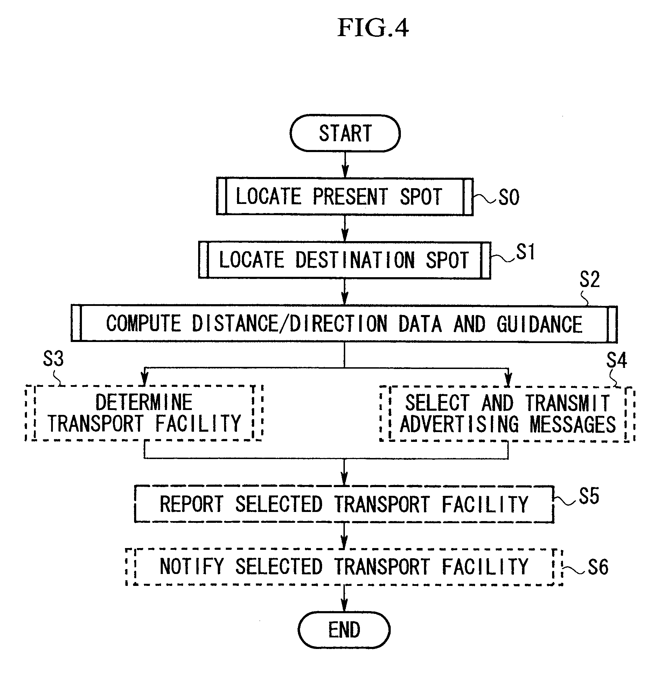

Figure 4 indicates a flowchart for the operation of the navigation system 1. The operation shown in Figure 4 is commenced when the telephony card 7 completes a line connection with the telephone 2, and after the processing section 5 is notified of a completion of connection by the telephony card 7.

First, the present spot locating section 50 executes the steps to receive position information from the telephone 2 transmitting DTMF signals. The present spot locating section 50 searches through the longitude/latitude data 62 using the position information as the search key to acquire the longitudinal and latitudinal data of the present position of the user (step S0).

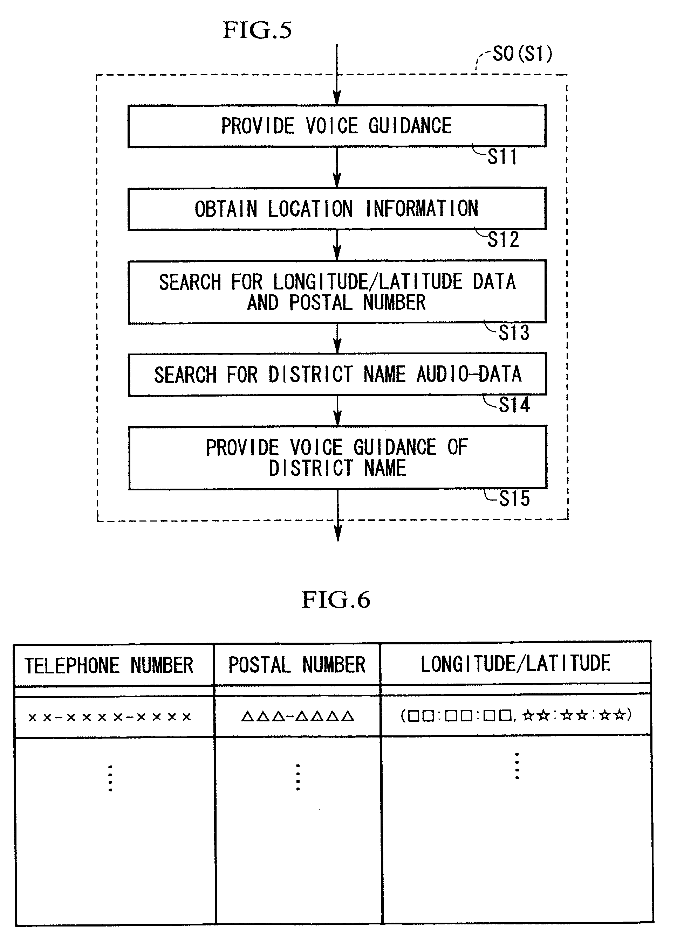

Figure 5 indicates the details of step S0 for determining the present position.

First, the present spot locating section 50 executes the steps to provide voice guidance to the user so that the user can enter information regarding the present position of the user (step S11). That is, the present spot locating section 50 acquired a voice file related to audio guidance data necessary for inputting the user's present position information from the data stored in the audio guide data 61. Then, the present spot locating section 50 outputs the digital data, contained in the voice file acquired, to the telephony card 7. The telephony card 7 converts entered analogue data to digital data, and outputs the results as audio-data to the telephone 2 through the pubic telephone line 3, thereby enabling the user to hear the voice guidance message on the telephone 2 so as to acquire information regarding whereabouts of the present position. An example of such voice message may be

"to acquire your present position. please enter the telephone number of the public telephone you are using, and press the (#) key when finished".

Such a process of converting the audio-data stored in the voice file by way of the telephony card 7 is referred to as a [guidance process], in this system.

Upon hearing the voice guidance, the user inputs the relevant telephone number using the keys on the telephone 2 and presses (#) key as the last step. This step prompts the telephone 2 to sent the DTMF signals corresponding to the pressed keys.

Next, upon detecting that DTMF signals are entered, the telephony card 7 determines numerals and the signs corresponding to the DTMF signals according to the associated frequency components, and notifies the processing section 5.

When notified by the telephony card 7, the present spot locating section 50 acquired the telephone number and the number key to indicate the end of the task entered from the inquiring telephone 2 by (step S12).

Then, the present spot locating section 50 searches the longitude/latitude data 62, using the telephone number as the search key, and acquired longitudinal and latitudinal data and a postal number corresponding to the position (address) of the inquiring telephone having the telephone number transmitted (step S13). Figure 6 indicates an example of the table of longitude/latitude data 62. The longitude/latitude data 62 are arranged in the table so that a postal number, assigned to the position of the telephone 2 and its longitudinal and latitudinal data, corresponds to each telephone number. The present spot locating section 50 acquired the postal number, longitude and latitude by searching through the longitude/latitude data 62 using the telephone number as the search key. The precision of the longitudinal and latitudinal data is within 0.1 second, which is the same as the precision associated with the GPS. Accordingly, it is possible to specify a position with high precision. Here, 0.1 second corresponds to about 3.1 m in the latitude direction while near the 35-degree latitude, 0.1 second corresponds to about 2.5 m in the longitudinal direction.

Next, the present spot locating section 50 searches through the district name audio-data 63 using the postal number acquired in step S13 as the search key, and finds a voice file for announcing the position name corresponding to the postal number (step S14). In the district name audio-data 63, each postal number corresponds with the file name containing the voice file for use in announcing the position name associated with the postal number. It is supposed that the voice file is in the wav-format.

The present spot locating section 50 provides a voice guidance using the voice file specified in step S14 (step S15). An example of such voice guidance may be:

"present position is xx number, xx street, is this correct?".

By following such a guidance procedure, the user can confirm whether there has been any error in inputting the position information on the present position.

Accordingly, the present spot locating section 50 acquired position information on the present position using the DTMF signals transmitted by the telephone 2, searching through the longitude/latitude data 62 using the position information as the search key to acquire longitudinal and latitudinal data for the present position of the user. Here, the position information on the present position, postal numbers, longitudinal and latitudinal data are stored in RAM in the processing section 5.

Next, the destination spot locating section 51 acquired position information on the destination position sent from the telephone 2 using the DTMF signals. The destination spot locating section 51 searches through the longitude/latitude data 62 using the destination information as the search key to acquire longitudinal and latitudinal data for the destination. (Figure 4, step S1). In this case, the details of the steps taken by the destination spot locating section 51 are roughly the same as those taken by the present spot locating section 50. But, the voice guidance in step S11 in Figure 5 announces a message such as:

"to enter your destination, please enter the telephone number of the destination position. and press the (#) key when finished".

Here, position information such as destination position information, postal numbers, longitudinal and latitudinal data are stored in RAM in the processing section 5.

Next, the position computation section 52 executes the steps to compute the linear distance and direction between the present position and the destination according to the longitudinal and latitudinal data acquired in the present spot locating section 50 and the longitudinal and latitudinal data acquired in the destination spot locating section 51. Also, the position computation section 52 notifies by voice the results of computation to the telephone 2 (Figure 4, step S2).

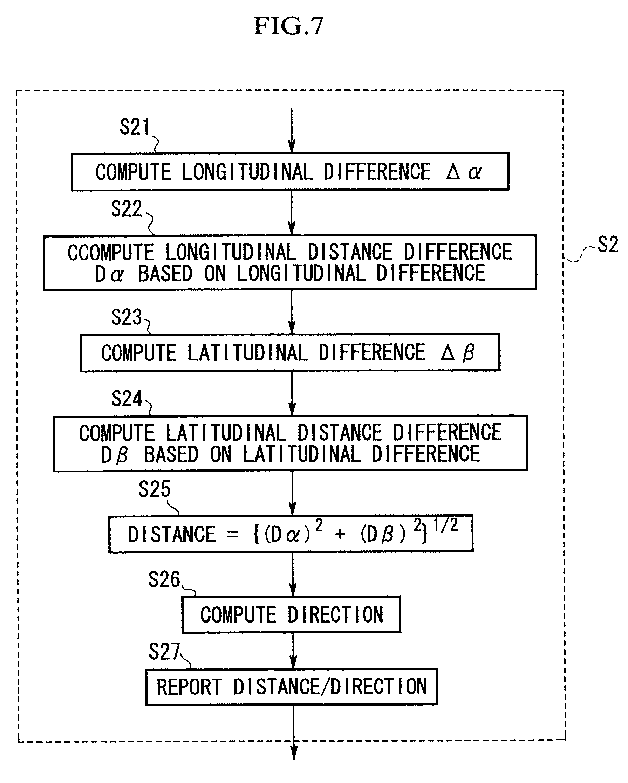

Figure 7 indicates the details of this process, and will be referred to in explaining the steps taken in step S2.

First, the position computation section 52 computes a longitudinal distance $D\alpha$ based on the longitudinal difference $\Delta\alpha$ acquired in step S21 (step S22) from the latitude of this spot.

Similarly, the position computation section 52 computes a latitude distance $D\beta$ based on the latitudinal difference $\Delta\beta$ (steps S23, 24).

Next, the position computation section 52 computes the linear distance between the present position and the destination position according to the longitudinal distance $D\alpha$ and the latitudinal distance $D\beta$ (step S25).

Also, the position computation section 52 computes the direction to the destination according to the vectors $(D\alpha, D\beta)$ determined by the longitudinal distance $D\alpha$ and the latitudinal distance $D\beta$ (step S26). In this case, because an approximate direction is sufficient for the direction guidance, the position computation section 52 chooses one of directions separated by 45 degrees, i.e., [north], [north west], [west], [south west], [south], [south east], [east], or [north east].

Next, the position computation section 52 provides a voice report of the results of computation in steps S25, 26 to the telephone 2 (step S26). That is, the position computation section 52 notifies by voice according to a guidance process based on the computed results and voice file stored in the audio guide data 61. An example of the voice message may be:

"the distance to the destination is xx meters, and the direction is xx".

Accordingly, the position computation section 52 notifies the linear distance and the direction between the present position and destination position. The computed results are stored in RAM in the processing section 5.

Next, the transport means determining section 53 executes the steps to determine an optimum route from the present position to the destination position. by searching through the transport facilities data 64 using the search keys, longitudinal and latitudinal data acquired in the present spot locating section 50, or longitudinal and latitudinal data acquired in the destination spot locating section 51 or computation results acquire in the position computation section 52 (Figure 4, step S3).

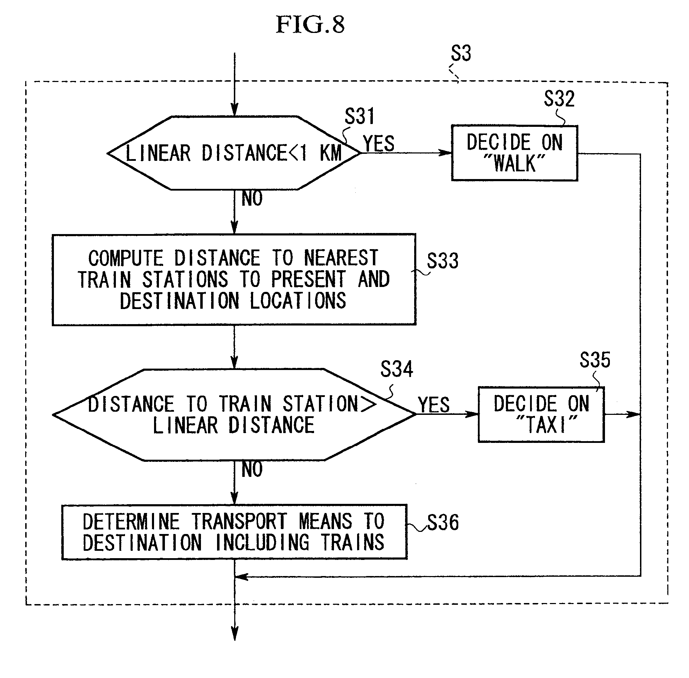

Figure 8 indicates the details of this processing, and will be referred to in explaining the processing details in step S3.

First, the transport means determining section 53 determines whether the move from the present position to the destination position can be made by walking (step S31). An example of such a process of determining is, if the distance computed by the position computation section 52 is less than 1 km, for example, it decides that walking is possible. If move by walking is deemed possible, the transport means determining section 53 decides that the optimum facility is walking (step S32), and completes the step.

If, in step S31, walking is deemed to be unsuitable, the transport means determining section 53, performs the following computations, using the longitudinal and latitudinal data of the present position and the destination position as well as the transport facilities data 64:

(1) searches longitudinal and latitudinal data of a local train station nearest to the present position and the linear distance to the local train station; and
(2) searches longitudinal and latitudinal data of a destination train station nearest to the destination position and linear distance to the destination train station (step S33). In this case, the transport facilities data 64 include longitudinal and latitudinal data on all the relevant train stations.

Next, the transport means determining section 53 examines whether a taxi is a suitable means for transport from the present position to the destination position (step S34). An example of such an examination process is described in the following. Designating the linear distance between the present position and the destination position computed in the position computation section 52 by [A], and designating the linear distance between the present position and the nearest local train station acquired in step S33 by [B], and designating the linear distance between the destination position and the nearest destination train station by [C], if

$$B+C \gg A > 2 \text{ km}$$

then, move by taxi only is judged to be an appropriate means of transport. If move by taxi only is deemed appropriate, the transport means determining section 53 decides that the optimum means of transport is taxi, and completes step S3.

On the other hand, if a move by taxi only is deemed inappropriate, the transport means determining section 53 examines a suitable combination of [walking], [taxi] and [train] method of move (step S36). Here, information such as local station, destination station, linear distances from the present position to the local station and destination station to the destination position. and determines an optimum combination of means of transport, including trains. For example, if the linear distances between the present position and the destination position as well as to and from their respective stations are less than 1 km, movement between these points are made by walking, otherwise, a taxi is chosen. Also, the transport facilities data 64 include train routing information and train transfer times, and the transport means determining section 53 consults such databases and determines an optimum route from the present position to the destination position.

By following the steps described above, the transport means determining section 53 determines optimum transport facilities from the present position to the destination position. Also, information relating to the transport facilities chosen is stored in RAM in the processing section 5.

In the meantime, while the transport means determining section 53 is determining the optimum transport facilities, the advertisement processing section 54 transmits advertising messages stored in the advertising message data 65 to the telephone 2 (Figure 4, step S4).

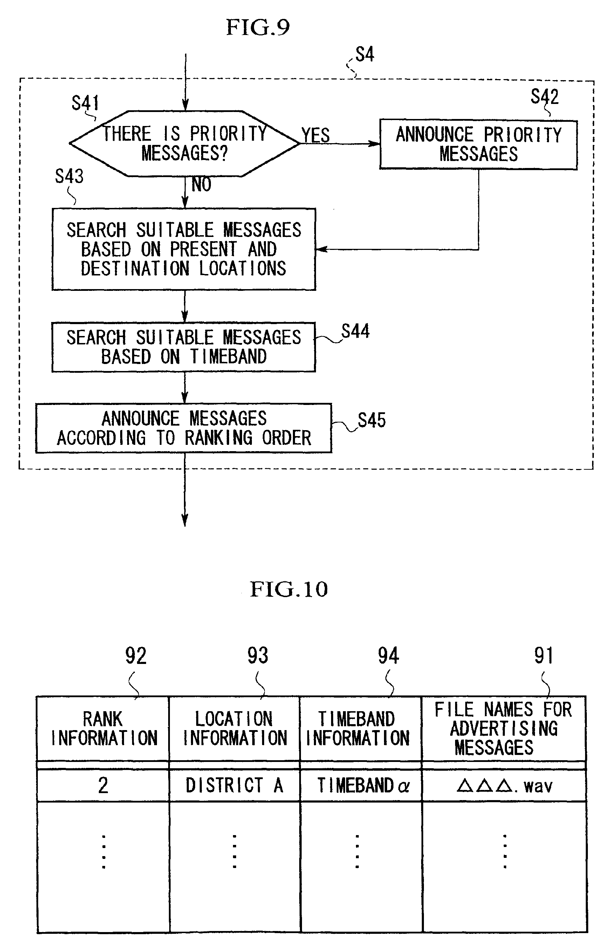

Figure 10 indicates an example of the table of advertising messages data 65 to be searched by the advertisement processing section 54. As shown in this table, the advertising message data 65 are stored in a voice file, in this case an advertising message file name 91, which is related to rank information 92, district information 93, timeband information 94. Here, [advertising messages file] is assumed to be in the wav-format.

Here, rank information 92 is information related to the priority order of the messages to be announced, and contains rank which is indicated by [S], [1], [2], [3] ...., for example. Rank order [S] indicates the highest priority that the message is to be announced without restriction. For example, information such as traffic tie-ups or natural disasters is given this rank [S] so that the message can be announced in any district and timebands.

District information 93 is information related to the district to be targeted for advertising. It becomes possible to direct a message customized to a particular district by providing district information 93. In this case, district information 93 is represented by one or a plurality of postal numbers.

Timeband information 94 is information related to the timebands for announcing the message. It becomes possible to advertise for select businesses that are active in certain timebands by providing timeband information. In this case, timebands are as follows:

$$\alpha \cdots 7:00 \sim 11:00$$
$$\beta \cdots 11:00 \sim 16:00$$
$$\gamma \cdots 16:00 \sim 22:00$$
$$\delta \cdots 22:00 \sim 7:00$$

so that one or more timebands are included in timeband information 94.

Figure 9 indicates the details of processing steps performed by the advertisement processing section 54 in step S4.

First, the advertisement processing section 54 refers to the rank information 92 in the advertising message data 65, and examines whether there are any priority messages to be announced (step S41). In practice, the advertisement processing section 54 checks whether there are any advertising messages with an [S] rank.

If there is a priority message, the advertisement processing section 54 acquires the file name of the advertising message and performs a guidance process for announcing the advertising message by using the wav-file (step S42).

If there is no priority messages or when the step of announcing the priority message is completed, the advertisement processing section 54 searches through the district information 93, using as search keys information related to the present position acquired in step S0 and information related to the destination position acquired in step S1, and extracts relevant data (step S43). In practice, the advertisement processing section 54 extracts data (records) containing the postal numbers of the present position or destination position as district information 93.

Next, the advertisement processing section 54 executes the steps to search through the records acquired in step S43, using the current time as the search key, and extract relevant records (step S44). In practice, the advertisement processing section 54 narrows the selection by selecting those records having the current timeband in the timeband information 94.

Then, the advertisement processing section 54 sequentially announces messages in the rank order from the narrowed record in step S44, in other words, performs a guidance process (step S45).

Here, processing in step S45 stops when several specific messages have been announced or when the process of determining a transport facility by the transport means determining section 53 (Figure 4, step S3) is completed.

Accordingly, the advertisement processing section 54 executes the steps for announcing advertising messages customized to individual districts and timebands.

Next, the transport means determining section 53 executes the steps to report the transport facility selected in step S3 to the telephone 2 (Figure 4, step S5). That is, the transport means determining section 53 notifies the telephone 2 by executing a guidance process using the transport means selected in step S3 and the voice file stored in the audio guide data 61. For example, when the optimum transport means is determined to be walking, report may be announced as follows:

"the destination position can be reached from the present position by walking, the distance is xx meters and it is in the xx direction".

Also, if the optimum transport means is determined to be a taxi, the report may be announced as follows:

"taxi is suitable for reaching the destination position from the present position. the distance is xx meters, and it is in the xx direction".

Next, the transport facility advisory section 55 executes the steps to dispatch a taxi if the user requests such a service, and transmit information necessary for dispatching a taxi to the transport facility terminal device 4 (Figure 4, step S6).

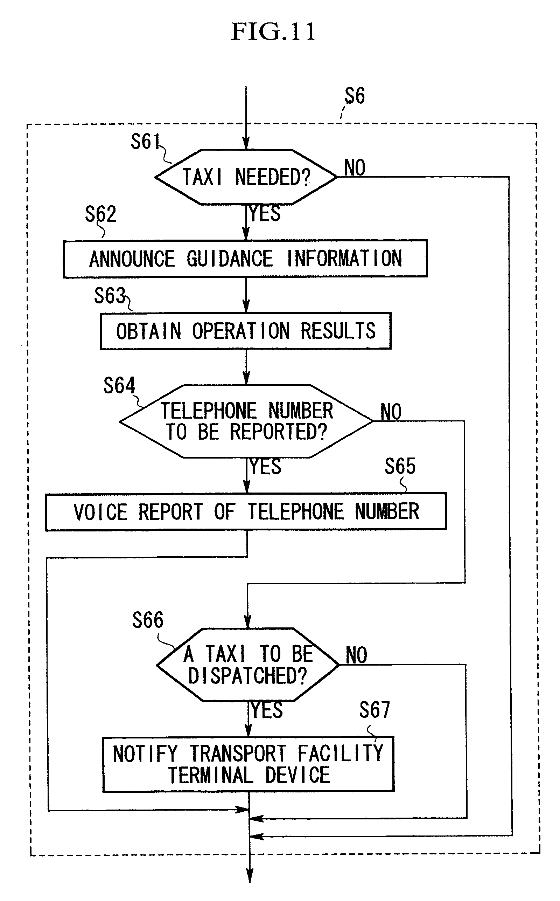

Figure 11 indicates the details of the process and will be referred to in explaining the steps taken in step 6.

First, the transport facility advisory section 55 checks whether a taxi as a transport means has been chosen in step S3 by the transport means determining section 53 (step S61). If a taxi has been decided as the transport means for moving from the present position to the destination position or from the present position to the nearest train station, then the transport facility advisory section 55 judges that a taxi has been chosen as the means of transport. Here, if it judges that a taxi has not been chosen, the transport facility advisory section 55 finishes the process.

If it is judged that a taxi has been chosen, the transport facility advisory section 55 executes a guidance process for dispatching a taxi using a voice file stored in the audio guide data 61 (step S62). The guidance provided in this case may be announced as follows:

"a taxi will be dispatched to the destination position (or a nearest train station), so, if a taxi is desired please press 1 and #, if the nearest taxi dispatching center is desired, please press 2 and #, and if it is wished to terminate navigation service, please press 0 and #".

Following such guidance instructions, when the user operates the buttons on the telephone 2 accordingly, the telephone 2 transmits DTMF signals. The DTMF signals are detected by the telephony card 7, and a detected result, "1, #", "2, #" or "0, #", will be transmitted to the processing section 5.

When a notice from the telephony card 7 is received by the transport facility advisory section 55, an operation result indicating the user's selection is acquired by the transport facility advisory section 55 (step S63).

Next, by referencing the operation results acquired in step S63, the transport facility advisory section 55 judges whether or not the content of the operation results is a notice of a telephone number of the nearest taxi company (step S64). That is, when the operation result acquired in step S63 is "2, #:, then the transport facility advisory section 55 judges that the content of the operation result is a notification of the telephone number of the nearest taxi company.

When it is judged that the content of the operation result is a telephone number of the nearest taxi company, the transport facility advisory section 55 refers to the transport facilities data 64 to find the telephone number of the nearest taxi-dispatching center, and reports the telephone number by voice (step S65). In this case, the transport facilities data 64 stores relevant information such as the longitudinal and latitudinal data of the dispatching center, its telephone number, and the company name and so on. Then, the transport facility advisory section 55 searches through the transport facilities data 64 using the longitudinal and latitudinal data of the present position as the search key, and acquired information related to the telephone number of the taxi dispatching center nearest from the present position and company name, and performs guidance processing using the voice file stored in the audio guide data 61. The voice message may be announced as follows:

"the telephone number of the nearest taxi company is xx. The name of the taxi company is xx".

When processing of step S65 is finished, the transport facility advisory section 55 has completed processing steps in S6.

If, in step S64, the transport facility advisory section 55 judges that the content of the operation is not the notification of telephone number of the nearest taxi company, it judges whether or not the content of the operation is dispatching of a taxi, by referencing the operation result acquired in step S63 (step S66). That is, if the operation result acquired in step S63 is "1, #", the transport facility advisory section 55 judges that the content of the operation is dispatching of a taxi.

If the transport facility advisory section 55 judges that the content of the operation is dispatching of a taxi, it searches for the telephone number to connect to the transport facility terminal device 4 disposed in the taxi-dispatching center by referencing the transport facilities data 64. Then, the transport facility advisory section 55 transmits information necessary for dispatching a taxi to the transport facility terminal device 4 (step S67).

In this case, the transport facilities data 64 stores relevant information such as the longitudinal and latitudinal data of the dispatching center, the telephone number assigned to the terminal device 4, and the company name and the like. Then, the transport facility advisory section 55 searches through the transport facilities data 64 using longitudinal and latitudinal data of the present position as the search key, and acquired information related to the telephone number of the taxi dispatching center nearest to the present position and company name.

Then, the transport facility advisory section 55 accesses the transport facility terminal device 4 using a line different than the line connected to the user, and transmits information necessary for dispatching a taxi. Here, [information necessary for dispatching a taxi] is the present position of the user at least. Therefore, the transport facility advisory section 55 transmits at least one of either the telephone number of the present position or longitudinal and latitudinal data acquired by the present spot locating section 50. Further, the transport facility advisory section 55 may also transmit other information such as the postal number or district name corresponding to the postal number and information related to the destination position.

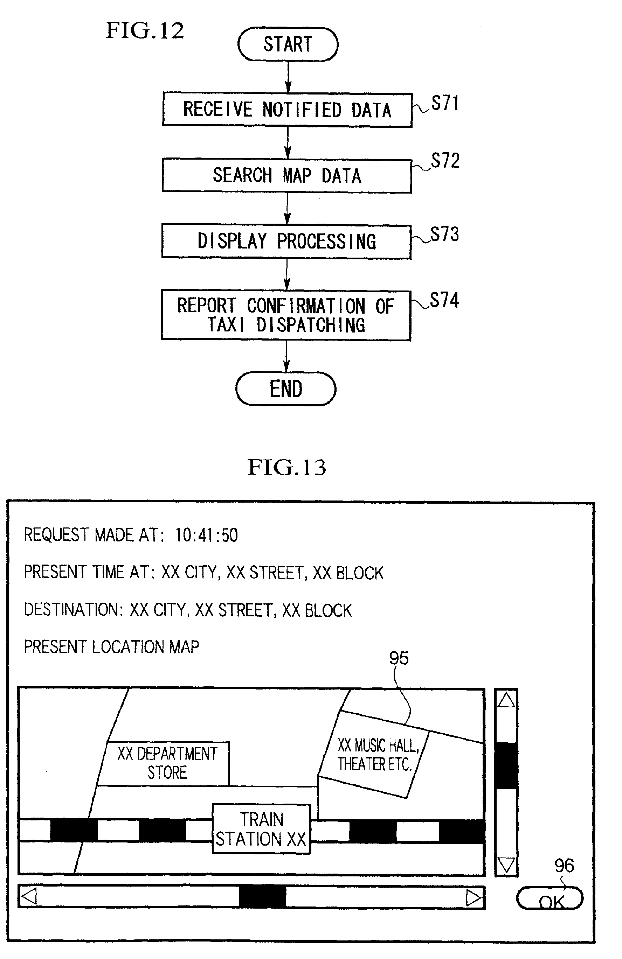

The operation of the transport facility terminal device 4 receiving data from the navigation system 1 is shown in Figure 12. Here, the operation is started when the modem 47 completes the connection to the navigation system 1 and the processing section 41 receives a report of completion.

First, the data receiving section 42 acquired information sent by the navigation system 1 through the modem 47 (step S71). In this case, information sent by the navigation system 1 is related to longitudinal and latitudinal data of the present position, the district name of the present position, and the district name of the destination position.

Next, the display processing section 43 acquired street information of the neighborhood of the present position by searching in the map data 46 (step S72). In this case, the map data 46 relates longitudinal and latitudinal data to the map image.

Then, the display processing section 43 displays an image such as the one shown in Figure 13 (step S73). In Figure 13, the present position of the user is shown by a reference numeral 95.

The operator working on the display processing section 43 dispatches a taxi according to the display content, and clicks [OK] shown in Figure 13 to indicate the completion of taxi dispatching process, then, the display processing section 43 reports to the navigation system that the step of taxi dispatching has been completed (step S74). The display processing section 43 outputs information acquired in step S71 to the log file 45 and commands the modem to disconnect the line, to complete the process.

Upon receiving a report from the transport facility terminal device 4 that the taxi dispatching process has been completed, the transport facility advisory section 55 executes a guidance process to announce that a taxi has been dispatched using the voice file stored in the audio guide data 61. The report may be announced as follows:

"a taxi from xx company has been dispatched".

As described above, the transport facility advisory section 55 thus executes the steps to dispatch a taxi according to a request by the user.

In this embodiment, the present spot locating section 50 and the destination spot locating section 51 acquire telephone number as the position information. This approach is desirable from the viewpoints of specifying the present position and destination position more precisely than otherwise, but the method is not limited to this approach. For example, position information may be represented by a postal number. In such a case, the longitude/latitude data 62 may include a specific position in a district specified by a postal number, for example, a central position in the district.

Also, in this embodiment, the present spot locating section 50 acquires position information according to the user's instructions (Figure 5, steps S11, 12). On the other hand, if the telephony card 7 has a capability to acquire a telephone number of a caller by means of a communication service, the steps S11, 12 may be eliminated so that the present spot locating section 50 receives the information related to the present position through the telephony card 7.

Also, in this embodiment, the position computation section 52 computed both a linear distance and a direction between the present position and the destination position. but this is not the only method. For example, the position computation section 52 may compute either a distance or a direction to be reported.

Also, in this embodiment, if the transport facilities data 64 included street data related to longitudinal and latitudinal data, and furthermore, the position computation section 52 included a capability to provide routing according to the street data on the basis of the longitudinal and latitudinal data, then, the position computation section 52 may report a routing distance according to the routing information instead of a linear distance between the present position and the destination position.

Also, in this embodiment, the position computation section 52 computes/reports linear distance and direction between the present position and the destination position, and the transport means determining section 53 selects an optimal transport facility for moving from the present position to the destination position. In other words, the navigation system 1 first reports linear distance and direction from the present position to the destination direction, then reports an optimal transport facility, resulting in reporting twice. The system may be arranged so that the transport means determining section 53 has all the functions excepting the reporting means shown in Figure 7, step S27, so that the linear distance and direction information is contained in a notice of optimum transport facility to result in one reporting.

Also, in this embodiment, the transport facilities data 64 may contain

    (1) train schedules and ticket prices, and
    (2) taxi service charges

so that, if taxi or train are selected as optimum transport means, the transport means determining section 53 may report the time as well as the cost required to move from the present position to the destination position.

Also, in this embodiment, the transport means determining section 53 selected one or more transport means from a group of means "walking", "taxi", and "train", but the method is not limited to this approach. If the transport facilities data 64 includes information other than those above, they may be included in the consideration.

Also, in this embodiment, the advertisement processing section 54 announced advertising messages while the transport means determining section 53 is undertaking the process of determining a transport facility, but the method is not limited to this approach. It may be arranged so that the advertisement processing section 54 announces advertising messages during the idle times between the user and the navigation center 1 or at other specified times.

Also, in this embodiment, advertising messages were related to rank information 92 indicating the priority order of messages, district information 93 indicating the district to be targeted and timeband information 94 indicating the timeband in a day for announcing the messages. Customized messages need not be limited to such methods. For example, reasonably effective targeting of markets may be achieved by selecting one or two of rank information 92, district information 93 and timeband information 94. Advertising messages may also be announced in a given order without being restrained by the rank information 92, district information 93 or timeband information 94.

Also, in this embodiment, the transport facility terminal device 4 was disposed at the taxi dispatching center and the navigation system 1 transmitted information necessary for dispatching a taxi to the terminal device 4, when the user request such a service. But the method is not limited to such an approach. If the transport facility terminal device 4 is disposed in another transport facility, the navigation system 1 may send information on a transport facility to another facility if another facility is relevant to means for transporting the user.

Also, in this embodiment, the user accessed the navigation system 1 through a public telephone connected by wire to a pubic telephone line 3. This method is desirable because of the ease of identifying the present position from the telephone number, but the method is not limited to such an approach. For example, portable phone terminal or personal handy system (PHS) terminal device can also access the navigation system 1. In such a case, the user of portable phones and PHS terminal device may enter the telephone number of the nearest wired public telephone. Or, the navigation system 1 may acquire the position of the common services (CS) station operating with the portable phones or PHS.

Also, in this embodiment, the navigation system 1 operates in conjunction with a telephony card 7 provided with a capability to generate DTMF signals. But the method is not limited to such an approach. The navigation system 1 may be provided with a modem to operate with signals in audio frequency bands that are outside of the voice communication protocol to be processed in the processing section 5. In such a case, the processing section 5 is further provided with a signal discrimination section to perform DTMF signal detection by software by detecting and discriminating DTMF signals from the results of spectrum analysis of spectra acquired by frequency conversion of DTMF signals.

Also, in this embodiment, voice files are assumed to be in the wav-format, but the method is not limited to such an approach. Other file formats are equally applicable.

In addition, in the present embodiment, the transportation facility advisory section 55 carries out the processing shown in Fig. 11 in the case of using a transportation facility where taxies, etc., can be reserved. In this processing, in step S 62, the transportation facility advisory section 55 carries out voice guidance indicating that the telephone call will be transferred to a predetermined transportation facility, and then in step S 63, in the case that it is determined that this telephone call transfer processing has been selected, processing to carry out telephone call transfer so that the line between the user and the transportation facility is connected. Thereby, the receiver of the service can request the transportation facility for a reservation to be met by a taxi without having to make another separate telephone call to the transportation facility. Moreover, this telephone call transfer to a telephone on an external line can be realized by using a service provided using a pubic telephone line. Reservations of air-services or reservations to cruise companies by taxi, etc., are examples of "transportation facilities where reservations are possible", and transportation facilities in general are the object. Furthermore, the transportation facility advisory section 55 can carry out telephone call transfer for room reservations as well in the case that guidance to rooms carried out in addition to guidance to transportation facilities. In this manner, the above processing can have as an object in general facilities where reservations can be made in a range wherein the transportation facility advisory section 55 is supported. In addition to this processing, the transportation facility advisory section 55 can store the number of times telephone call transfers were carried out in general for every predetermined period for reservations that could be made at facilities where reservations can be made. Thereby, the company that operates the navigation system can calculate the fees in the case that a service fee depending on the number of telephone call transfers is charged to each reservation destination.

In addition, the collect call telephone numbers can be allocated in the navigation system in the present embodiment. In this case, the user of the terminal does not incur a fee, and thus the use of the navigation system can be promoted.

In addition, the advertisement processing section 54 of the present embodiment can be used for telephone services other than telephone services such as navigation systems. Moreover, examples of other telephone services include:

  1) telephone services provided by telecommunication companies, such as telephone number assistance, weather reports, time, and messaging services,
  2) telephone advising services (user support services for products, etc., over the telephone, child consulting, counseling, etc.),
  3) service in the field (requesting by telephone services for repair during an breakdown of an automobile while driving outdoors, etc.),
  4) services using digital information, such as "i-mode" served in Japan,
  5) email arrival notification service for a pre-registered email address and pre-registered URL contents update notification service,
  6) answering registration notification service for a pre-registered telephone number, facsimile arrival notification service for a pre-registered telephone number, and
  7) toll-free telephone connection service.

The structure of these telephone service systems, and in particular, the structures shown in Fig. 2 for the above numbers 1 through 4, are described below.

The memory section 6 stores the service data in which information necessary for providing the telephone service is stored and the advertising message data 65. Moreover, when data for voice guidance using the provided telephone service is necessary, the service data includes the data for the voice guidance.

Here, an example of the data for the service is illustrated in the following.

In the case of a telephone service related to telephone number assistance, the service data provides a data structure allowing a search for a telephone number using addresses or names, and furthermore, includes data for delivering the retrieved telephone number by voice. In addition, in a telephone service related to weather reports, the database associates and stores area code numbers and weather report information delivered by voice.

In this manner, service data can be broadly classified as follows:

1) data that is necessary to support providing the service via an operator in the case that the telephone service is carried out via an operator at the service provider, and
2) data that is necessary to support providing automatic services in the case that the telephone service is carried out automatically, and not via an operator at the service provider.

The processor 5 provides a position acquisition section that acquires the position information for the current position from the terminal of the telephone, etc., a service providing section that provides the service by voice to the terminal using the above-described service data and assists in providing the telephone service, and the above-described advertisement processor 54.

Here, the position acquiring section acquires position information for specifying the position of the person to receive the telephone service, for example, by one of the following:

1) If the terminal can generate a DTMF signal, the user inputs a telephone number, etc., and the telephone number serves as the position information for specifying the current position of the user.
2) The position acquiring section provides a function that processes the communication information notification service provided on the transmission network, and acquires the telephone number of the caller by this notification service. In addition, the acquired telephone number serves as position information for determining the current position of the user.
3) In the case that the system is connected to ISDN (Integrated Service Digital Network), the position acquisition section provides a function for associating the caller number notification provided by ISDN, and by this notification, the telephone number of the caller is acquired. In addition, the acquired telephone number serves as the position information for determining the current position of the user.
4) In the case that as a terminal a cellular handset or a PHS terminal is used, the current position of the user is determined by acquiring the position of the public phone station (CS) that covers the terminals.

An example of the operation of the service providing section is as follows:

An example wherein the service providing section carries out assistance for providing a telephone service is as follows. In the case that the provided service is telephone number assistance, the service providing section searches service data using the name information or address information input by the operator as a key, and acquired the telephone number. Next, the service providing section provides voice notification about the retrieved telephone number.

An example of the case that the service providing section provides the telephone service without using the operator is as follows. In the case that the provided service is a weather report, the service providing section uses service data that stores the contents of a weather report to be delivered by voice, and notifies the terminal about the weather report by voice.

In the above example, there is the case that the service providing section provides a function that supports providing service via an operator, and there is the other case that the service providing section provides a function that supports providing service automatically.

Except for the point that the position information of the destination is not used, the operation of the advertisement processing section 54 is as described above. An advertisement processing section operates, for example, during the following times:

1) the time while waiting for a connection to the operator in the case of telephone service provided via an operator,
2) the processing time of other processing sections, such as the time during which the service providing section searches the service data, and
3) predetermined times before and/or after the telephone service is provided.

In addition, the structure of the telephone service system that carries out the reception and update notification services shown in 5 and 6, for the structure of the system shown in Fig. 2, is as described below.

The memory section 6 stores the service data that stores the information necessary for providing the telephone service, and the advertising message data 65. If data for voice guidance in the provided telephone service is necessary, the service data includes data for this voice guidance.

Here, an example of service data is shown in the following.

In the case of telephone service related to email arrival notification for pre-registered email addresses, the service data includes the email addresses to be monitored and the telephone numbers that are to be notified.

In the case of telephone service related to pre-registered notification of the update of the contents of pre-registered URLs, the service information includes the URLs to be monitored and the telephone numbers that are to be notified.

In addition, for telephone service related to notification of answering service messages to pre-registered telephone numbers or notification of reception of a FAX on pre-registered telephone numbers, the service data includes the telephone numbers to be monitored and the telephone numbers that are to be notified.

In addition, the processing section 5 provides a service providing section that provides the telephone service to the terminal using the above-described service data and the above-described advertisement processing section 54.

An example of the operation of the service providing section and the advertisement processing section 54 is described below.

First, the service providing section monitors the arrival and updating of information to be monitored.

Here, in the case of email arrival notification, "information to be monitored" denotes the email that arrives at an email address pre-registered in the service data, and in the case of the update of the contents of a URL, it denotes the contents that have been updated in a URL registered in the service data. In addition, in the case of notification of an answering service registration notification or a FAX reception notification, this expression denotes an answering service message registered for a telephone number or a FAX received at a telephone number to be monitored, which are registered in the service data.

The service providing section automatically dials the telephone number pre-registered in the service data when there is an arrival or update of information to be monitored. In addition, the service providing section carries out connecting of the line of the terminal for that telephone number.

Next, the advertisement processing section 54 searches for advertising message data using the position information determined by the pre-registered telephone number described above and the current time, and delivers the retrieved advertising message to the terminal connected to the line. The processing of the advertisement processing section 54 is as described above, but in the case that the personal information of the user is also registered in the service data, the advertisement processing unit 54 determines the priority ordering of the advertisements to be delivered by integrating personal information such as the vocation, age, sex, etc. of the person registered, position information determined by the exchange number of the telephone, etc., when the registered number is that of a fixed line telephone, information related to the type of registered contents, information related to the time the connection is established, etc.

For example, in the case that a female in her twenties wishes to send electronic mail to the line of the long-distance number at city A, usually the advertisement of a cosmetic company is delivered, and in the case that the time of the connection is 11:30 a.m., the advertisement of a restaurant in city A is delivered. This is how the selection of information is carried out.

In addition, the advertisement for a new service of a securities company can be delivered irrespective of the time to a user who has registered the URL showing stock prices.

In addition, at the time of notification about the advertising message by the advertisement processing unit 54, the service providing section provides telephone services related to receiving and updating of information to be monitored to the terminal connected to the line.

For example, in the case of an email arrival notification service, not only is the user notified about the arrival of the email, but the contents of the received email that has arrived can be read mechanically using voice synthesizing technology.

In addition, in the case of an email reception arrival notification service, if the terminal connected to the line provides a FAX function, not only notification about the updates of contents, but an updated homepage can be faxed to a terminal connected to the line as an image.

In addition, in the case of an answering message registration notification service or a FAX reception notification service, not only notification about the registration of an answering machine message, but the replaying of a registered answering machine message or the transfer of a received FAX can be carried out.

Furthermore, the advertisement processing section 54 can be used even in a telephone service such as a toll-free telephone connection service wherein the number of the collect call telephone connection service in item 7 above is called, and the telephone connection to the connection destination can be established toll-free by inputting the telephone number of the connection destination. The operation of the telephone service system in this telephone service is described below. Moreover, it is assumed that in the telephone service system, telephone numbers for the collect telephone call services have been allotted.

When the user call the telephone service system, the position acquisition section acquires the position information related to the current position of the user using the above-described method.

Next, the advertisement processing section 54 searches the advertising message data 65 using this position information, etc., and carries out processing for delivering advertising messages in a pre-determined time period.

Subsequently, the service providing section carries out guidance processing, wherein the telephone number of the connection destination is input using the terminal, and the telephone number of the connection destination is acquired from the received DTMF signal.

Next, the advertisement processing section 54 searches the advertising message data 65 using the telephone number of this connection destination as the position information 93, and carries out processing to deliver the advertising messages in a pre-determined time interval.

Finally, the service providing section carries out processing in which the transfer of the telephone call is carried out so that the connection of the line between the connection source, which is the user, and the connection destination is established.

Moreover, during the operation of the above telephone service system, the telephone service system carries out processing to deliver the advertising messages two times, but the advertising messages can be delivered during either one of the processes. In addition, the above-described telephone service system can deliver the advertising messages at timings other than these.

In the toll-free telephone connection service, although the user of this service must listen to the advertising messages, the telephone connection can be made toll-free. In addition, the provider of this service can expect to earn advertising revenues.

In addition, in the advertising message data 65 shown in Fig. 10, priority information that distinguishes whether or not delivery of the advertising message is obligatory is associated with each advertising message field name 91, and the advertisement processing section 54 can deliver the advertising messages based on this priority information. Here, in the priority information, either "priority advertisement" or "non-priority advertisement" is set. Moreover, "priority advertisement" denotes an advertisement whose delivery to at least one of the caller (user) or party called (connection destination) is obligatory irrespective of their intensions or actions. In addition, "non-priority advertisement" denotes an advertisement that is delivered or discontinued depending on the actions of the user and the connection destination.

For the advertising message file name 91, the operation of the advertisement processor part 54 in the case that there is associated priority information is explained using as an example the above-described toll-free connection service.

When the user calls the telephone service system, the position acquiring section acquires the position information related to the current position of the user using the above-described methods, for example.

The advertisement processing section 54 uses the transmitters telephone number that has been acquired as position information, searches the position information 93 of advertising message data 65, and thereby can narrow down the advertising messages appropriate for the area in which the user is present. Then the advertisement processing section 54 carries out processing in which advertising messages whose priority information is set to "priority advertisement" are delivered.

When the processing to deliver these advertising messages has ended, the service providing section carries out guidance processing in which the telephone number of the connection destination is input using the terminal.

Next, the advertisement processing section 54 carries out processing in which, among the advertising messages narrowed down as described above, the advertising messages whose priority information is set to "non-priority advertisement" are delivered until the service providing section finishes acquiring the telephone number of the connection destination.

When the service providing section has finished acquiring the telephone number of the connection destination by the DTMF signal, it carries out the telephone call processing using another line separate from user's line.

The advertisement processing section 54 searches the advertising message data using the telephone number of the connection destination as the position information 93, and then among the retrieved advertising messages, specifies advertising messages whose priority information is set to "non-priority advertisement". In addition, the advertisement processing section 54 carries out processing in which the specified advertising messages are delivered to the user until the connection destination answers (picks up the telephone receiver).

When the connection destination answers, the service providing section connects the line between the user and the system and the line between the connection destination and the system, and the user and the connection destination can then talk to one another. In addition, the service providing section starts a timer in the system for limiting the calling time.

When the timer has reached the time limit for the call, the service provider section carries out guidance processing indicating to the user and the connection destination that the time is finished, the connection between the two lines is released, and processing to terminate the line between the connection destination and the system is carried out. In addition, at the point in time when the connection between the two lines has been released, in the advertisement processing section 54, processing is carried out in which advertising messages whose priority information is set to "priority advertisement" are delivered until the connection source, which means the user, cuts the line (hangs up the receiver).

In the above manner, the advertisement processing unit 54 carries out processing that uses the priority information.

In addition, the following may be used as a working configuration of the toll-free telephone connection service described above.

The telephone service system can be made to limit the connection destinations that can establish toll-free connections. In this manner, by limiting the connection destinations, the operator of the system can acquire advertisements while narrowing down sponsors.

In this case, the telephone service system can store one or a plurality of telephone numbers of connection destinations that can establish toll-free connections as connection destination data in the memory 6. When the service providing section has finished acquiring the telephone numbers of connection destinations, it refers to the connection destination data, and in the case of a connection destination having no data, delivers to the connection source, which means the user, a message communicating this fact, and then terminates the telephone call.

In this case, in the advertising message data 65 shown in Fig. 10, the advertising message file name 91 is associated with the telephone number of each connection destination in the connection destination data, and the advertisement processing section 54 can carry out processing in which advertising messages corresponding to the telephone number of the connection destinations are delivered after the point in time that the telephone number of the connection destination is acquired.

Thereby, the telephone service system can prevent the delivery of advertisements that are inappropriate in terms of the connection destination, and thus preventing, for example, "delivery of an advertisement for a funeral parlor when the connection destination is a wedding facility."

Furthermore, the telephone service system can deliver advertisements that are appropriate in terms of the connection destination. Easily carried out examples could be:

1) delivering advertising messages about a personal computer discount store when the connection destination is the user support related to computers;
2) delivering advertising messages about a fishing tackle store when the connection destination is a fishing resort;
3) delivering advertising messages about a cosmetics company when the connection destination is a 25 year old single female, and the user, who is the connection source, is generally assumed to be a friend of the same sex.

Furthermore, the telephone service system providing toll-free telephone connection service stores data associating the telephone number for each user with the telephone number and number of telephone lines of the connection destination, and when the service providing section is processing, by using this data the advertisement processing section 54 can determine the advertisements to be delivered to the user by updating this data in real time. For example, in the case of a user who frequently telephones user support for a personal computer, the advertisement processing section 54 will deliver the advertisement for a personal computer shop the next time the user makes a telephone call.

Furthermore, by using the data described above, the telephone service system can be made to ignore telephone calls of the user who repeats operations that are clearly harassing, for example, when the user randomly inputs the telephone numbers of connection destinations.

Furthermore, in the toll-free telephone connection service described above, the telephone service system can limit the toll-free connections by using at least one of either the telephone number of the user or the telephone number of the connection destination. An example of a connection limitation is the limitation based on connection fees. For example, in the case that the connection source, which means the user, or the connection destination is using a cellular telephone or a PHS, or the case of a long distance or international telephone, the service providing section will not establish the connection to the connection destination.

Furthermore, in the toll-free telephone connection service described above, when the time limit of the telephone call has been exceeded, the telephone service system can forcibly terminate the connection, or deliver a 15 second advertisement to the user and the connection destination every one minute. As a disincentive to making lengthy telephone calls, the telephone service system can increase the time used to deliver advertising messages depending on the length of the telephone call, starting at 15 seconds, for example, and at the first minute increasing to 30 seconds, the third minute to 45 seconds.

In addition, in the present embodiment, the advertisement processing section 54 can use the rank information 92 in the advertising message data 65 in Fig. 10, in the following manner.

In the advertising message data 65, the one advertising message file name 91 for each of company A and company B is set, and the rank information (priority order) of the advertisement can be determined in this order. In this case, the advertisement processing unit 54 stores information necessary for processing in memory 6 and delivers the advertisements in one of the following manners:

1) Delivering advertisements in the order of the rank information.
   For example, when user X calls, an advertisement for company A is delivered, and when user Y calls immediately thereafter, an advertisement for company B is delivered.
2) Delivering advertisements in the rank information user for each user.
   For example, the advertisement of company A is delivered the first time user X calls, that of company B the second time, and then the advertisement of company A is returned to the third time. Similarly for user Y or user Z.
3) Depending on the telephoning time at the toll-free telephone connection service, apply the case wherein the time for delivering advertising messages is increased.

The advertisement of company A is first delivered to all users X, Y, and Z, but in the case of increasing the time allocated for delivering advertising messages according to the conversation time in the toll-free telephone connection service, the advertisements of company B, company A, ..., are delivered in sequence. In this case, when user X calls again, the advertisements start from company A.

Furthermore, in combination with the processing described above, by associating an expiration period with each of the advertising messages in the advertising message data 65, the advertisement processing section 54 will not deliver advertising messages whose expiration period has passed. In addition, in the advertising message data 65, the number of times an advertisement is delivered and the limit of the number of times the advertising messages are to be delivered are associated with each advertising message, and the advertisement processing section 54 can stop delivering the advertising message after the number of times the advertisement is delivered has reached the limit on the number of times the advertisement is to be played.

Moreover, in the telephone service system, in the case that advertising messages in the advertising message data 65 is not associated with position information that indicates the region in which the advertising message is delivered, even if the acquired current position is acquired by the position acquiring section, this position information cannot be used as a search key for searching for advertising message data 65. Thus, in this type of case, the processing section 5 of the telephone service system need not provide a position acquiring section.

In addition, the advertising processing section described above can count only the number of times each advertising message is delivered for each pre-determined period. Thereby, the operating company of the telephone service system, including a navigation system, can thus use this count for fee calculation in the case that the advertising sponsors are charged a service fee depending on the number of times advertising messages that are.

In addition, for delivering messages, the advertisement processing section 54 of the telephone service provider can:

1) connect the telephone to the sponsor after the call finishes when the user performs some sort of action (for example, pressing #3); or
2) send the same advertisement one more time when the user performs some sort of action (for example, pressing *3).

Thereby, the sponsor can be immediately accessed when the user has heard the advertising messages of interest or the advertising message can be listened to again in the case that there were points that were not clearly heard.

In addition, the advertisement processing section 54 can deliver one or more number of comprehension questions on the advertisement messages which have been delivered to the user by this system previously. In this case, for example, the user must answer the questions using DTMF signals generated from the telephone terminal after listening to the advertisement messages. And after that he can receive the telephone service only when all the answers are correct. If some of the answers are wrong, he can try to answers the same questions again after listening to the advertisement messages.

Thus, the advertisement processing section 54 carries out guidance processing related to the above processing in advance, receives the DTMF signal detection signal from the telephony card 7 while the advertising message is delivered, and in the case that a predetermined button being pressed by the user is detected, can carry out processing according to the detected button pressing action.

This means that in the case that the telephone is connected to the sponsor after the call is completed, in the advertising message data 65, the sponsor's telephone number is also associated with each advertisement file name 91. In addition, the advertisement processing section 54 detects a predetermined button pressing action by the user while the advertisement is being delivered, and then when a predetermined button pressing action by the user indicating that the call has been completed is detected, caries out the transfer of the telephone call to the sponsor using the telephone call transfer service provided by the public telephone line, and connects the line between the user and the sponsor. Moreover, the telephone call transfer to the sponsor is not limited to occurring after the telephone call is complete, but can occur at a different timing. Furthermore, in the case that the telephone number allotted to the telephone service system is the telephone number of the collect call telephone connection service, the telephone call transfer to the sponsor can be provided toll-free to the user.

In addition, in the case that the same advertisement is delivered one more time, the advertisement processing section 54 carries out processing to deliver this message again when a pre-determined button pressing action by the user is detected while the advertisement is being delivered.

In addition, the service and advertising messages provided by the telephone service system can include all information services that the user receives by a telephone, such as displaying characters and images on the liquid crystal of the cellular telephone. This means that one or both the services and advertisements do not necessarily have to be audio.

Also, the navigation system 1 may be operated by recording computer-readable application programs on a recording medium, and by executing the processing steps of the processing section 5 or the function of the above-described telephone service system shown in Figure 2 by a computer system. Also, the processing section 41 may be operated by recording computer-readable application programs in a recording medium, and by executing processing of information sent from the navigation system 1 by a computer system. Here, computer system, in this context, includes any operating systems (OS) and peripheral hardware. Computer readable recording media include portable media such as floppy disks, opto-magnetic disks, DVD, CD-ROM, as well as memory devices such as hard disks housed in computer systems. Further, computer readable recording media include short-term dynamic memories (transmission media inclusive of wave signals) used in transmitting applications through such network means as Internet or telephone lines, as well as other short-term memories such as volatile memories used in servers and client computer systems.

Furthermore, "a computer readable recording medium" includes items that hold a program for a certain time interval, such as the volatile memory in a computer system that includes server and client in the case that the program is sent via a network such as the Internet or a communications line such as a telephone line.

In addition, the above-described program can be sent from a computer storing this program in a memory apparatus to another computer system via a transmission medium or by a transmission wave in a transmission medium. Here, the "transmission medium" that transmits the program means a medium having a capacity to transmit information such as a network, like the Internet or a communication line such as a telephone line.

Application program may perform a part of the described functions, or may be operated in conjunction with pre-recorded programs stored in computer systems, that is, the so-called differential files (difference programs).

The embodiments of the present invention have been explained with reference to the drawings, but the specific designs of the navigation system are not limited to those disclosed in texts and drawings. Other modifications may be made within the scope of the principle of this present invention.

**Claims**

1. A telephone service system that delivers advertisement messages via a pubic telephone line to a terminal connected to the pubic telephone line, comprising:

   a memory section (6) that stores service data for the information necessary for providing the telephone service and advertisement message data (65) for the advertisement messages;
   a position acquiring section that acquires position information from the terminal;
   a service providing section that provides the telephone service to said terminal or carries out assistance in providing the telephone service, using said service data ;
   an advertisement processing section (54) that delivers to said terminal advertisement messages stored in said advertisement message data; and wherein:
   in said commercial message data (65), said advertisement messages are associated with one or more information that is rank information indicating the priority order when delivering advertisement messages, position information indicating the area in which the advertisement messages are to be delivered, and timeband information indicating timeband during which the advertisement messages are to be delivered, and;
   said advertisement processing section (54) searches said advertisement message data using said position information and/or current time depending on the information associated with the advertisement messages, and delivers the retrieved advertisement message to said terminal.

2. A telephone service system that delivers advertisement messages via a pubic telephone line to a terminal connected to the pubic telephone line, comprising:

   a memory section (6) that stores service data for the information necessary for providing the telephone service and advertisement message data (65) for the advertisement messages;
   a service providing section that provides the telephone service to said terminal using said service data;
   an advertisement processing section (54) that delivers to said terminal an advertisement message stored in said advertisement message data; and wherein:
   in said advertisement message data (65), said advertisement message is associated with one or more information that is rank information indicating the priority order when delivering advertisement messages, position information indicating the area in which the advertising messages are to be delivered, and timeband information indicating the timeband during which the advertisement messages are to be delivered; and
   said service providing section provides to said terminal connected to the line the telephone service related to arrival or updating of information that is to be monitored, after carrying out the connection with the terminal of a pre-registered telephone number due to the arrival or updating of information to be monitored; and
   said advertisement processing section (54) searches said advertisement message data using the position information determined by said pre-registered telephone number and/or current time depending on the information associated with the advertisement message, and delivers to said terminal connected to the line the retrieved advertisement message.

3. A telephone service system that delivers advertisement messages via a pubic telephone line to a terminal connected to the pubic telephone line, comprising:

a memory section (6) that stores advertisement messages, and stores advertisement message data (65) associated with one or more of information that is rank information indicating the priority order when delivering advertisement messages, position information indicating the area in which the advertisement messages are to be delivered, and timeband information indicating the timeband during which advertisement messages are to be delivered;
a service providing section that acquires the telephone number of the connection destination from the terminal of said connection source, and connects the line between the terminal of said connection source and the terminal of the connection destination; and
an advertisement processing section (54) that delivers advertisement messages stored in said advertisement message data to one of said terminals; and wherein:
said advertisement processing section (54) searches said advertisement messages using position information determined by telephone number of the terminal and/or current time depending on the information associated with the advertisement messages, and delivers the retrieved advertisement messages to said terminal.

4. A telephone service system according to any one of claims 1 to 3, wherein:

said advertisement messages are associated with the rank information of the advertisement messages indicating the priority order when delivering messages, the position information indicating the area in which the advertisement messages are to be delivered, and the timeband information indicating the timeband during which the advertisement messages are to be delivered; and wherein, said advertisement processing section (54):
delivers with priority to said terminal an advertisement message in the case that there is an advertisement message having, as rank information, a rank setting to be delivered unconditionally and
searches said advertisement message data using said position information and/or current time and delivers sequentially to said terminal the retrieved advertisement messages in the case that there is no advertisement message having, as rank information, a rank setting to be delivered unconditionally, or after delivering to said terminal the advertisement message having, as rank information, a rank setting to be delivered unconditionally.

5. A telephone service system that delivers advertisement messages via a pubic telephone line to a terminal connected to the pubic telephone line, comprising:

a memory section (6) that stores connection destination data comprising connectable telephone numbers, and stores advertisement message data (65) that associates each telephone number in said connection destination data with an advertisement message;
a service providing section that acquires the telephone number of the connection destination form the terminal of connection source, and connects the terminal of said connection source with the terminal of the connection destination in the case that the telephone number of said connection destination is in said connection destination data; and
an advertisement processing section (54) that delivers to one of said terminals advertisement messages stored in said advertisement message data; and wherein:
said advertisement processing section (54) delivers to the terminal advertisement messages associates with the telephone number of said connection destination in the case that the telephone number of said connection destination is in said connection destination data.

6. A telephone service system according to claim 5, wherein:

said advertisement messages are associated with the rank information of the advertisement messages indicating the priority order when delivering messages, the position information indicating the area in which the advertisement messages are to be delivered, and the timeband information indicating the timeband during which the advertisement messages are to be delivered; and wherein:
said advertisement processing section (54):
delivers with priority to said terminal an advertisement message in the case that there is an advertisement message having, as rank information, a rank setting to be delivered unconditionally when delivering advertisement messages to terminals; and

searches said advertisement message data using said position information and current time and delivers sequentially to said terminal the retrieved advertisement messages in the case that there is no advertisement message having, as rank information, a rank setting to be delivered unconditionally, or after delivering to said terminal the advertisement message having, as rank information, a rank setting to be delivered unconditionally.

7. A telephone service system according to any one of claims 3 to 6, wherein:

said service providing section limits the connection of the line between the terminal of said connection source and the terminal of the connection destination by at least one of the telephone numbers of the connection source and the connection destination.

8. A telephone service system according to any one of claims 3 to 6, wherein:

said advertisement processing section (54) delivers to the terminal advertisement messages at a predetermined time in the case that the connection time of the connection between the terminal of the connection source and the terminal of the connection destination exceeds a specified time.

9. A telephone service system according to claim 8, wherein:

said advertisement processing section (54) delivers to the terminal advertisement messages at a predetermined time each time that the connection time of the connection between the terminal of the connection source and the terminal of the connection destination exceeds a specified time.

10. A telephone service system according to any one of claims 1 to 9, wherein:

said advertisement messages are associated with the telephone numbers in said advertisement message data (65); and
said advertisement processing section (54) transfers telephone calls at a predetermined timing to a telephone number associated with the advertisement message in the case that a predetermined DTMF signal is detected during delivery of an advertisement message.

11. A telephone service system according to any one of claims 1 to 10, wherein:

said advertisement processing section (54) re-delivers the advertisement message in the case that a predetermined DTMF signal is detected during delivery of the advertisement message.

12. A telephone service method that delivers an advertisement message via a pubic telephone line to a terminal connected to the pubic telephone line, including:

a step of preparing, in advance, advertisement messages and advertisement message data is prepared in advance, in which said advertisement messages are associated with one or more of information that is rank information of the advertisement message indicating the priority ordering when delivering the advertisement messages, position information indicating the area in which the advertisement messages are to be delivered, and timeband information indicating the timeband during which the advertisement messages are to be delivered;
a step of acquiring position information form the terminal;
a step of providing a telephone service to a terminal or carrying out assistance in providing the telephone service, using service data that stores information necessary for providing the telephone service; and
a step of searching said advertisement message data using said position information and/or current time according to information associated with the advertisement message and delivering to said terminal the retrieved advertisement messages.

13. A telephone service method that delivers advertisement messages via a pubic telephone line to a terminal connected to the pubic telephone line, including:

a step of preparing, in advance, advertisement messages and advertisement message data in which said advertisement messages are associated with at least one or more of information that is rank information of the advertisement message indicating the priority ordering when delivering the advertisement messages, position information indicating the area in which the advertisement messages are to be delivered, and timeband information indicating the timeband during which the advertisement messages are to be delivered;
a step of monitoring message arrivals or updates of information that is to be monitored based on service data storing information necessary for providing the telephone service, and connecting the line to the terminal of a pre-registered telephone number based on the message arrival or updating of information that is to be monitored;
a step of searching said advertisement message data using the position information determined by said pre-registered telephone number and/or current time depending on the information associated with the advertisement message, and delivering the retrieved advertisement message to the terminal connected to said line; and

a step of providing the telephone service related to message arrival or updating of the information to be monitored to the terminal connected to said line.

14. A telephone service method that delivers advertisement messages via a pubic telephone line to a terminal connected to the pubic telephone line, including:

a step of preparing, in advance, advertisement messages and advertisement message data in which said advertisement messages are associated with one or more information that is rank information of the advertisement message indicating the priority ordering when delivering the advertisement messages, position information indicating the area in which the advertisement messages are to be delivered, and timeband information indicating the timeband during which the advertisement messages are to be delivered;

a step of acquiring the telephone number of the connection destination from the terminal of said connection source and connecting the line between the terminal of said connection source and the terminal of the connection destination; and

an advertisement processing step of delivering to one of said terminals the advertisement messages stored in said advertisement message data; and wherein:

in said advertisement processing step, said advertisement message data is searched using position information determined by telephone number of the terminal and/or current time according to information associated with the advertisement message, and the retrieved advertisement message is delivered to said terminal.

15. A telephone service method that delivers advertisement messages via a pubic telephone line to a terminal connected to the pubic telephone line, including:

a step of preparing, in advance, connection destination data comprising connectable telephone numbers and advertisement message data that stores advertisement messages and associates each telephone number in said connection destination data with advertisement;

a step of acquiring the telephone number of the connection destination form the terminal of connection source, and connecting the line between the terminal of said connection source and the terminal of the connection destination in the case that the telephone number of the connection destination is in said connection destination data; and

an advertisement processing step of delivering to one of said terminals advertisement messages that is stored in said advertisement message data; and wherein:

in said advertisement processing step, the advertisement messages associated with the telephone number of said connection destination is delivered to a terminal in the case that the telephone number of said connection destination is in said connection destination data.

16. A computer program product, comprising a computer readable medium, having thereon computer program code means adapted, when said program is loaded onto a computer, to make the computer execute the procedure of any one of claims 12 to 15.

# FIG.1

3

1:NAVIGATION SYSTEM

PUBLIC
CIRCUIT

2:TELEPHONE
(TERMINAL DEVICE)

4:TRANSPORTATION FACILITY
TERMINAL DEVICE

# FIG.2

1:NAVIGATION SYSTEM

5:PROCESSING SECTION

6:MEMORY SECTION

50
PRESENT SPOT
LOCATING SECTION

51
DESTINATION SPOT
LOCATING SECTION

52
LOCATION
COMPUTATION SECTION

53
TRANSPORTATION
MEANS DETERMINING
SECTION

54
ADVERTISEMENT
PROCESSING SECTION

55
TRANSPORTATION
ADVISORY SECTION

61
AUDIO GUIDE
DATA

62
LONGITUDE/LATITUDE
DATA

63
DISTRICT NAME
AUDIO-DATA

64
TRANSPORT
FACILITIES DATA

65
ADVERTISING
MESSAGE DATA

8

7
TELEPHONY CARD

PUBLIC CIRCUIT

# FIG.3

4:TRANSPORT FACILITY TERMINAL DEVICE

41:PROCESSING SECTION  44:MEMORY SECTION

42
DATA RECEIVING SECTION

43
DISPLAY PROCESSING SECTION

48

45
LOG FILES

46
MAP DATA

47
MODEM

PUBLIC CIRCUIT

## FIG.4

```
                        ┌──────────┐
                        │  START   │
                        └──────────┘
                             │
                             ▼
              ┌─────────────────────────────┐
              │ LOCATE PRESENT SPOT         │─── S0
              └─────────────────────────────┘
                             │
                             ▼
              ┌─────────────────────────────┐
              │ LOCATE DESTINATION SPOT     │─── S1
              └─────────────────────────────┘
                             │                              S2
                             ▼
        ┌──────────────────────────────────────────────────┐
        │ COMPUTE DISTANCE/DIRECTION DATA AND GUIDANCE      │
        └──────────────────────────────────────────────────┘
     S3      │                                    │      S4
             ▼                                    ▼
    ┌──────────────────────┐          ┌──────────────────────┐
    │      DETERMINE       │          │  SELECT AND TRANSMIT  │
    │  TRANSPORT FACILITY  │          │  ADVERTISING MESSAGES │
    └──────────────────────┘          └──────────────────────┘
             │                                    │
             └────────────────┬───────────────────┘
                              ▼
        ┌──────────────────────────────────────────────┐
        │      REPORT SELECTED TRANSPORT FACILITY       │─── S5
        └──────────────────────────────────────────────┘
                              │
                              ▼
        ┌──────────────────────────────────────────────┐
        │      NOTIFY SELECTED TRANSPORT FACILITY       │─── S6
        └──────────────────────────────────────────────┘
                              │
                              ▼
                        ┌──────────┐
                        │   END    │
                        └──────────┘
```

## FIG.5

```
                              ┌─ S0(S1)
    ┌ ─ ─ ─ ─ ─ ─ ─ ─ ─ ─ ─ ─ ─ ─ ─ ─ ─ ─ ─ ─ ┐
    │   ┌────────────────────────────────┐   │
    │   │   PROVIDE VOICE GUIDANCE        │   │
    │   └────────────────────────────────┘   │
    │                          └─ S11        │
    │   ┌────────────────────────────────┐   │
    │   │  OBTAIN LOCATION INFORMATION    │   │
    │   └────────────────────────────────┘   │
    │                          └─ S12        │
    │   ┌────────────────────────────────┐   │
    │   │ SEARCH FOR LONGITUDE/LATITUDE   │   │
    │   │   DATA AND POSTAL NUMBER        │   │
    │   └────────────────────────────────┘   │
    │                          └─ S13        │
    │   ┌────────────────────────────────┐   │
    │   │ SEARCH FOR DISTRICT NAME        │   │
    │   │   AUDIO-DATA                    │   │
    │   └────────────────────────────────┘   │
    │                          └─ S14        │
    │   ┌────────────────────────────────┐   │
    │   │   PROVIDE VOICE GUIDANCE OF     │   │
    │   │     DISTRICT NAME               │   │
    │   └────────────────────────────────┘   │
    │                          └─ S15        │
    └ ─ ─ ─ ─ ─ ─ ─ ─ ─ ─ ─ ─ ─ ─ ─ ─ ─ ─ ─ ─ ┘
```

## FIG.6

| TELEPHONE NUMBER | POSTAL NUMBER | LONGITUDE/LATITUDE |
|---|---|---|
| x x−x x x x−x x x x | △△△−△△△△ | (□□:□□:□□, ☆☆:☆☆:☆☆) |
| ⋮ | ⋮ | ⋮ |

EP 1 104 204 A2

# FIG.7

| S21 | COMPUTE LONGITUDINAL DIFFERENCE $\Delta\alpha$ |
| --- | --- |
| S22 | CCOMPUTE LONGITUDINAL DISTANCE DIFFERENCE $D\alpha$ BASED ON LONGITUDINAL DIFFERENCE |
| S23 | COMPUTE LATITUDINAL DIFFERENCE $\Delta\beta$ |
| S24 | COMPUTE LATITUDINAL DISTANCE DIFFERENCE $D\beta$ BASED ON LATITUDINAL DIFFERENCE |
| S25 | DISTANCE $= \{(D\alpha)^2 + (D\beta)^2\}^{1/2}$ |
| S26 | COMPUTE DIRECTION |
| S27 | REPORT DISTANCE/DIRECTION |

S2

# FIG.8

S3

S31

LINEAR DISTANCE<1 KM — YES → DECIDE ON "WALK" (S32)

NO

COMPUTE DISTANCE TO NEAREST TRAIN STATIONS TO PRESENT AND DESTINATION LOCATIONS (S33)

DISTANCE TO TRAIN STATION> LINEAR DISTANCE (S34) — YES → DECIDE ON "TAXI" (S35)

NO

DETERMINE TRANSPORT MEANS TO DESTINATION INCLUDING TRAINS (S36)

# FIG.9

S4

S41
THERE IS PRIORITY
MESSAGES?

YES → S42
ANNOUNCE PRIORITY
MESSAGES

NO

S43
SEARCH SUITABLE MESSAGES
BASED ON PRESENT AND
DESTINATION LOCATIONS

S44
SEARCH SUITABLE MESSAGES
BASED ON TIMEBAND

S45
ANNOUNCE MESSAGES
ACCORDING TO RANKING ORDER

# FIG.10

| 92 | 93 | 94 | 91 |
|---|---|---|---|
| RANK INFORMATION | LOCATION INFORMATION | TIMEBAND INFORMATION | FILE NAMES FOR ADVERTISING MESSAGES |
| 2 | DISTRICT A | TIMEBAND $\alpha$ | $\triangle\triangle\triangle$.wav |
| ⋮ | ⋮ | ⋮ | ⋮ |

# FIG.11

```
                                              S6
                    S61                         ⟍
                   ⟍    ┌──────────────┐       NO
                        │ TAXI NEEDED? │──────────────────┐
                        └──────────────┘                  │
                            │ YES                          │
         S62                ▼                              │
          ⟍    ┌─────────────────────────────────────┐    │
               │ ANNOUNCE GUIDANCE INFORMATION        │    │
               └─────────────────────────────────────┘    │
                            │                              │
         S63                ▼                              │
           ⟍   ┌─────────────────────────────────┐        │
               │ OBTAIN OPERATION RESULTS         │        │
               └─────────────────────────────────┘        │
                            │                              │
         S64                ▼                              │
          ⟍      ┌────────────────────┐      NO            │
                 │ TELEPHONE NUMBER    │──────────┐        │
                 │ TO BE REPORTED?     │          │        │
                 └────────────────────┘           │        │
                            │ YES        S65       │        │
                            ▼             ⟍        │        │
               ┌─────────────────────────────────┐│        │
               │ VOICE REPORT OF TELEPHONE NUMBER ││        │
               └─────────────────────────────────┘│        │
                            │                      │        │
                            └──────────┬───────────┘        │
         S66                           ▼                    │
          ⟍      ┌────────────────────┐     NO              │
                 │ A TAXI TO BE        │──────────┐         │
                 │ DISPATCHED?         │          │         │
                 └────────────────────┘          │         │
                            │ YES       S67       │         │
                            ▼            ⟍        │         │
               ┌─────────────────────────────┐   │         │
               │ NOTIFY TRANSPORT FACILITY    │   │         │
               │ TERMINAL DEVICE              │   │         │
               └─────────────────────────────┘   │         │
                            │◄───────────────────◄◄─────────┘
                            ▼
```

FIG.12

START

RECEIVE NOTIFIED DATA ⟶ S71

SEARCH MAP DATA ⟶ S72

DISPLAY PROCESSING ⟶ S73

REPORT CONFIRMATION OF TAXI DISPATCHING ⟶ S74

END

FIG.13

REQUEST MADE AT: 10:41:50

PRESENT TIME AT: XX CITY, XX STREET, XX BLOCK

DESTINATION: XX CITY, XX STREET, XX BLOCK

PRESENT LOCATION MAP

95

XX DEPARTMENT STORE

XX MUSIC HALL, THEATER ETC.

TRAIN STATION XX

96

OK